# EUROPEAN PATENT APPLICATION

(11) **EP 2 845 637 A1**
(43) Date of publication of application: **11.03.2015**
(21) Application number: 13784396.7
(22) Date of filing: 25.02.2013
(51) Int. Cl.: B01D 53/00, B01D 5/00

(54) **APPLIANCE FOR CAPTURING VOCS, APPLICABLE TO HYDROCARBON STORAGE TANKS, AND CAPTURING METHOD**

(30) Priority: 30.04.2012 ES 201230646
(71) Applicant: Albemarna, S.L., 46260 Alberic (Valencia) (ES)
(72) Inventor: MARTÍNEZ NAVARRETE, Antonio, E-46260 Alberic (Valencia) (ES); MARTÍNEZ NAVARRETE, Maximino, E-46260 Alberic (Valencia) (ES); MARTÍNEZ NAVARRETE, Rafael, E-46260 Alberic (Valencia) (ES)
(74) Representative: Ungria López, Javier
(86) International application number: PCT/ES2013/070117
(87) International publication number: WO 2013/164504

(57) **Abstract**

The invention relates to a portable equipment that uses the cold of liquid nitrogen to obtain the condensation of volatile organic compounds (VOCs), such as petrol vapors, acetone, alcohols etc. Said equipment basically consists of a condenser inside which an inner space is defined, wherein such volatile organic compounds condense, either by direct contact or by indirect contact as a result of the cooling generated in said inner space by the liquid nitrogen, benefiting from the cold of the outflow current of the condenser in order to previously cool the contaminated air current that contains the volatile organic compounds before entering the condenser. The equipment according to the invention has the advantage of being easily transportable, occupying a reduced space.

## Description

### OBJECT OF THE INVENTION

The present invention, as expressed in the title of this specification, relates to an equipment for capturing VOCs applicable to storage tanks intended for capturing volatile organic compounds (VOCs) by means of cryogenic condensation using liquid nitrogen. Such volatile organic compounds essentially comprise petrol vapors, acetones, alcohols, etc. The method for capturing said organic compounds is also an object of the invention.

An essential advantage of the equipment according to the invention is that it is portable and allows capturing operations to be implemented in a discontinuous manner in any place required.

One of the most significant applications is the capturing of organic vapors contained in a tank when it is desired to clean, repair or simply empty the same.

The equipment according to the invention also enables the outflow to the outside of the air contained in a tank, free of VOCs, reducing the quantity of contaminants discharged into the atmosphere during operations of this type.

On the other hand, the equipment according to the invention also enables the recovery of different compounds for their correct discharge or even their potential recovery.

### BACKGROUND OF THE INVENTION

At present, there exist different systems for capturing gases such as for example the Spanish patents for inventions with application numbers, P-9400043 and P-9801315, the latter being an improvement of the former.

Both cited patents basically deal with a system for filtering residual contaminant particles for smokes and gases by means of atomized ultra-freezing, said system is determined by from a housing in the interior of which a filter per se is housed which has an inflow mouth for the contaminated fluid and an outflow mouth, there existing in the interior of the filter at least some diffused water injectors supplied from an exterior tube and interior sprays of a cryogenic nitrogen in charge of solidifying this diffused water in hail form.

The patent for the invention with application number P-9801315 comprises a cooling appliance in charge of lowering the temperature of the water to a level close to its freezing point before this water flows through the injectors.

Other systems implement cryogenic condensation, highlighting that all of these are for continuous systems for high value added products.

Said systems are expensive and there are no systems which are portable and which can thus serve for cleaning and degassing operations for tanks such as is the case of the present invention. Furthermore, the equipment according to the invention, which is presented, is portable and constitutes a cheap solution for this type of process.

### DESCRIPTION OF THE INVENTION

In order to fulfill the aims and avoid the drawbacks mentioned in the previous sections, the invention proposes a equipment for capturing VOCs applicable to hydrocarbon storage tanks such as solvent, petrol tanks, etc.

When it is desired to empty, clean or carry out leak tightness tests in different tanks, all or part of its contents is discharged to the exterior, contaminating the atmosphere. These operations are usually short and in dispersed spaces. It should also be pointed out that the equipment according to the invention is compact and is primed to operate within a short time and at not very high costs.

The process is based in the physical basis of taking advantage of the vaporization heat of the liquid nitrogen, which passes from liquid to gas at a temperature of - 196° C, together with its latent and vaporization heat when it passes to a gaseous state, to reduce the temperature of the current rich in VOCs and cause the condensation of the vapors.

The equipment according to the invention is thus of the type which uses the cold of a cryogenic fluid such as liquid nitrogen to cause the condensation of volatile organic compounds (VOCs) such as petrol, acetones or alcohols.

It is characterized in that it comprises:
- A heat exchanger into which an inflow tube containing air contaminated with volatile organic compounds (VOCs) flows.
- A condenser in the inner space of which is generated a very low temperature by means of the liquid nitrogen, such condenser communicating with the heat exchanger by means of a first intermediate tube by way of which the contaminated air reaches the condenser after having passed through the interior of the heat exchanger by way of a first section of internal tube which joins the inflow tube to the mentioned first intermediate tube.
- A second intermediate outflow tube containing a current of cold air which is free from volatile organic compounds (VOCs), said second intermediate tube starts on the condenser and it flows into the heat exchanger, travelling through the interior of the same by means of a second section of internal tube which connects the outflow of the heat exchanger to an outflow tube.

The course of the cold air current cools the contaminated air current in the interior of the heat exchanger in its advance towards the condenser.

The condenser comprises vertical channels which incorporate droplet separators, also comprising baffles arranged in the inner space of the condenser between the inflow and the outflow of said condenser, the latter including also a collector vessel for the condensed compounds constituting the contaminant elements, such collector vessel constituting the bottom of the condenser. Such bottom comprises a descending surface converging towards the lowest area of the collector vessel.

At the outflow of the condenser it is possible to install a cyclone which collects and separates the condensed liquid particles which have not been separated by the droplet separator or by the force of gravity.

In a first embodiment of the invention, the condenser incorporates liquid nitrogen injectors which project this fluid inside the inner space of the condenser entering into direct contact with the current of contaminated air which incorporates the volatile organic compounds (VOCs) and which reaches the condenser by way of the first intermediate tube.

Such injectors are close to the inflow of the condenser, and in turn they project the liquid nitrogen in a direction perpendicular to the direction of the current of contaminated air which enters the interior of the condenser through the inflow of such condenser.

In a second embodiment of the invention, the condenser incorporates in its interior tubes through which the liquid nitrogen is made to circulate to cool the current of contaminated air which reaches the inner space of the condenser indirectly.

The equipment according to the invention also incorporates a collector tank for the condensed compounds which receives such condensed compounds by gravity from the condenser by way of an evacuation tube which starts on the lowest area of the collector vessel of the condenser, such evacuation tube flows into the collector tank arranged below the condenser. Said evacuation tube incorporates a control valve.

The process for capturing the volatile organic compounds (VOCs) is characterized in that:
- The current of contaminated air in the direction ascending inside the heat exchanger undergoes a first lowering of temperature caused by the return of the current of cold clean air which also enters inside the heat exchanger in the direction descending coming from the outflow of the condenser.
- A sharp drop in temperature by means of the liquid nitrogen is generated inside the inner space of the condenser, which causes the condensation of the volatile organic compounds (VOCs).
- The condensate generated inside the condenser fall downwards by gravity to the collector vessel constituting the bottom of the condenser, such condensate subsequently also flowing by gravity to the collector tank by way of the evacuation tube.
- The condensate particles which have not been eliminated by gravity in the condenser are eliminated by means of using the cyclone at the outflow of the condenser.
- The return current of clean air which travels the interior of the heat exchanger reaches the outflow tube.

Considering the first embodiment of the invention, the sharp drop in temperature inside the condenser is generated by means of the injection of liquid nitrogen in nebulized liquid form which enters into direct contact with the current of contaminated air which reaches the inner space of the condenser.

The current of contaminated air which enters inside the condenser follows a direction perpendicular to the injected current of liquid nitrogen.

Considering the second embodiment of the invention, the sharp drop in temperature inside the condenser is generated by means of liquid nitrogen which flows through the interior of tubes incorporated inside the inner space of the condenser, in such a way that the current of contaminated air which reaches the condenser enters into contact with said tubes through which the liquid nitrogen flows, sharply cooling in this manner.

Lastly, the system is optionally complemented by a conventional active carbon filter located at the outflow of the heat exchanger, an active carbon filter which ensures the capture of all residual contaminant such that in one of the final steps of the process such active carbon filter participates.

Subsequently, in order to facilitate a better comprehension of this specification and forming an integral part of the same, figures are attached in which the object of the invention is represented in an illustrative and non-limiting manner.

### BRIEF DESCRIPTION OF THE DRAWINGS

**Figure 1** **-** shows a perspective view of the equipment for capturing VOCs applicable to hydrocarbon storage tanks, which are the object of the invention. It basically comprises a heat exchanger, a condenser and a collector tank for the condensates.

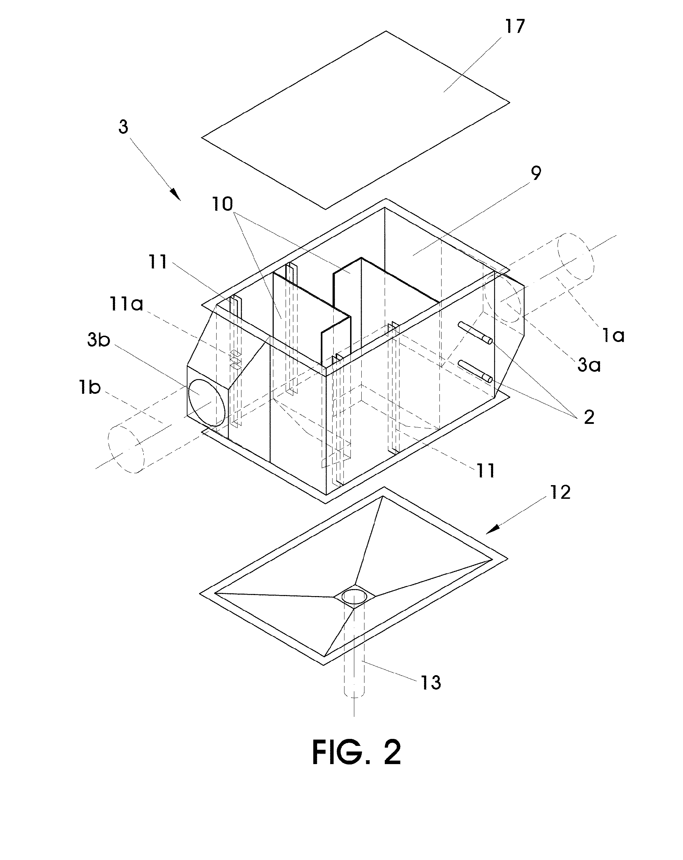

**Figure 2** **-** represents a perspective view of the condenser where the internal structure of such condenser is show in detail.

### DESCRIPTION OF AN EXEMPLARY EMBODIMENT OF THE INVENTION

Considering the numeration adopted for the figures, the equipment for capturing VOCs applicable to hydrocarbon storage tanks provides the following nomenclature used in the description:
1. - Inflow tube
1a. - First intermediate tube
1b. - Second intermediate tube
2. - Liquid nitrogen injectors
3. - Condenser
3a - Inflow
3b. - Outflow
4. - Heat exchanger
5. - Control valve
6.- Collector tank
7. - Outflow tube
8. - Support structure
9. - Upstream chamber
10.- Baffles
11. - Vertical channels
11a. - Droplet separators
12.- Collector vessel
13.- Evacuation tube
14. - First section of internal tube
15. - Second section of internal tube
16.- Tubes
17.- Closing lid
18. - Cyclone
19. - Active carbon filter

It comprises a support structure 8 in the form of a frame which support in principle a heat exchanger 4, a condenser 3 and a collector tank 6 of the compound condensates in such a way that a current of contaminated air containing the volatile organic compounds (VOCs) is initially introduced through an inflow tube 1 which flows into such condenser 3 an in turn it goes through the interior of the heat exchanger 4 by means of a first section of internal tube 14 in order for such current of contaminated air to subsequently reach the condenser 3 by way of a first intermediate tube 1 a which starts on the heat exchanger 4 and flows into the condenser 3 closed from above by means of a closing lid 17.

Inside the condenser 3, the current of contaminated air is subjected to a sharp drop in temperature by means of liquid nitrogen injectors 2 arranged in an upstream chamber 9 close to the inflow 3a of the condenser 3, the projection of the current of liquid nitrogen being perpendicular to the direction of the current of contaminated air inside the condenser 3.

This injection of liquid nitrogen in the form of nebulized gas interferes in a perpendicular manner with the current of contaminated air inside the condenser 3 causing close contact between the droplets of nitrogen and the air contaminated with VOCs, causing virtually instantaneous condensation, with which the droplets generated fall to a collector vessel 12 for the condensates constituting the bottom or base of the condenser 3, such condensed compounds subsequently passing by gravity to the collector tank 6 by way of an evacuation type 13.

Such collector tank 6 is located below the collector vessel 12, the same having a surface inclined in a descending manner converging towards the start of the evacuation tube 13. Such descending inclined surface comprises various inclined planes.

In this evacuation tube 13, a control valve 5 is inserted by way of which the condensates pass towards the collector tank 6.

The inner space of the condenser 3 has various baffles 10 to thus increase the tortuosity of the gas and therefore the time and the mixture of the cold nitrogen and the current of air contaminated with VOCs inside such inner space, thus increasing the output and effectivity of the assembly of the device according to the invention.

The baffles 10 acts as agents which benefit the mixture of air and liquid nitrogen, and they are arranged between the inflow 3a and an outflow 3b of the cited condenser 3.

The condenser 3 also incorporates in its inner space droplet separators 11 a incorporated into vertical channels 11 for ensuring that the droplets of the condensates do not exit the condenser 3.

A second intermediate outflow tube 1 b starts on the condenser 3, through which second intermediate outflow tube gas free of VOCs exits, which is still cold, such second tube 1 b flowing into the heat exchanger 4 in which the cited clean gas releases part of the cold gas to the inflow current of the condenser 3. The descending route of the cold and clean air through the interior of the heat exchanger 4 takes place by way of a second section of internal tube 15 which joins the second intermediate tube 1 b with the outflow tube 7 arranged outside of the heat exchanger 4 and through which the air free of the contaminate elements (VOCs) flows.

This gas free of VOCs can be directly expulsed to the atmosphere since it does not have contaminate compounds, thereby achieving the goal pursued by the equipment which is to not emit VOCs into the atmosphere. However, there exists the possibility of re-introducing the gases into the interior of the corresponding hydrocarbon tank. On the one hand, this takes advantage of the cold coming from the outflow current of the cryogenic system and on the other hand, owing to the fact that it also contains nitrogen, this current facilitates the inertization of the VOCs tank.

The form in which the contaminated air and the liquid nitrogen enter into contact may be changed, in such a way that as previously described the nitrogen enters into direct contact with the current of contaminated air.

Whereas, in a second embodiment, the cooling of the current of contaminated air takes place by indirect contact.

In this case, the liquid nitrogen is led through tubes 16 which are found in the interior of the condenser 3. The contaminated air passes around the tubes 16 through the interior of the condenser 3, which also has baffles 10 to increase the route, producing a contact which is not as close as in the case of direct injection, but sufficient to cause the condensation of the VOCs vapors. In this form of functioning, the current of nitrogen which exits the condenser 3, pure in this gas, may also be led through the corresponding hydrocarbon tank and thus inertize said VOCs tank, with which the dangers of explosivity during the operation are considerably reduced. Furthermore, in this case, the current of nitrogen introduced into the tank draws the vapors from the tank with atmosphere rich in VOCs and is re-introduced into the condenser 3.

The condensate particles which have not been eliminated by gravity in the condenser are eliminated by means of the use of a cyclone 18 at the outflow of the condenser 3.

Lastly, the system is optionally complemented by a conventional active carbon filter 19 located at the outflow of the heat exchanger 4, an active carbon filter 19 which ensures the capture of any remaining contaminants in such a way that such active carbon filter is involved in one of the final steps of the process.

One thing to point out regarding the form of operating the equipment according to the invention is that it serves both for operations in which air is pumped to the tank to remove the gases from its interior as well as for the case where there is a vacuum pump which sucks the gases contained therein.

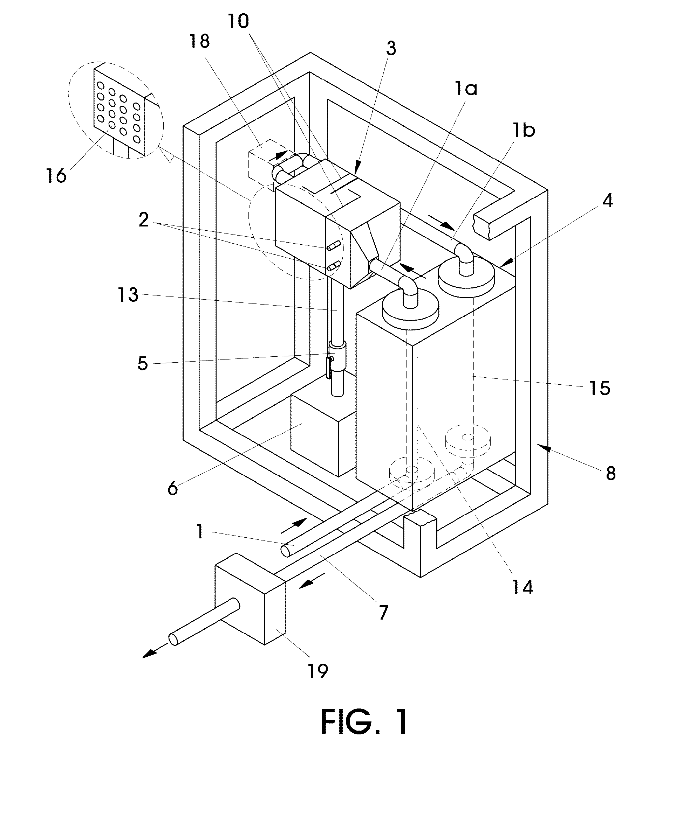

Thus, as has been clearly expressed in Figure 1, the equipment according to the invention constitutes a portable and compact assembly which can be easily transported in a vehicle to be taken to a place where there is a need to carry out cleaning, emptying, repairing operations etc. in fuel tanks.

## Claims

1. **Equipment for capturing VOCs, applicable to hydrocarbon storage tanks**, being of those that use the cold of a cryogenic fluid such as liquid nitrogen to cause the condensation of volatile organic compounds (VOCs) such as petrol, acetones, alcohols;
**characterized in that** it comprises
- a heat exchanger (4) into which an inflow tube (1) of air contaminated with volatile organic compounds (VOCs) flows;
- a condenser (3) in the inner space of which a very low temperature is generated by means of liquid nitrogen, such condenser (3) communicating with the heat exchanger (4) by means of a first intermediate tube (1 a) by way of which the contaminated air reaches the condenser (3) after having passed through the interior of the heat exchanger (4) by way of a first section of internal tube (14) which joins the inflow tube (1) to the first intermediate tube (1 a);
- a second intermediate outflow tube (1 b) for a current of cold air which is free of the volatile organic compounds (VOCs), said second intermediate tube (1 b) stars on the condenser (3) and flows into the heat exchanger (4), going through the interior of the same by means of a second section of internal tube (15) which connects to the outflow of the heat exchanger (4) with an outflow tube (7) for the current of clean air.
- an external support structure (8) which surrounds at least partially said condenser (3) and heat exchanger (4).

2. **Equipment for capturing VOCs, applicable to hydrocarbon storage tanks,** according to the preceding claim, **characterized in that** the condenser (3) comprises:
- vertical channels (11) which incorporate droplet separators (11 a);
- baffles (10) arranged in the inner space of the condenser (3) between an inflow (3a) and an outflow (3b) of such condenser (3);
- a collector vessel (12) of the condensed compounds, such collector vessel corresponding to the bottom of the condenser (3) and comprising a descending surface converging towards the lowest area of such collector vessel (12).

3. **Equipment for capturing VOCs, applicable to hydrocarbon storage tanks,** according to claim 2, **characterized in that** the condenser (3) incorporates liquid nitrogen injectors (2) which project this fluid inside the inner space of the condenser (3), entering into direct contact with the current of contaminated air which incorporates the volatile organic components (VOCs) and which reaches the condenser (3) by way of the first intermediate tube (1 a).

4. **Equipment for capturing VOCs, applicable to hydrocarbon storage tanks,** according to claim 3, **characterized in that** the injectors (2) are close to the inflow (3a) of the condenser (3), and that they project the liquid nitrogen in a direction perpendicular to the direction of the current of contaminated air which enters the interior of the condenser (3) through the inflow (3a) of such condenser (3).

5. **Equipment for capturing VOCs, applicable to hydrocarbon storage tanks,** according to claim 2, **characterized in that** the condenser (3) incorporates, in its interior, tubes (16) through which the liquid nitrogen is led to indirectly cool the current of contaminated air which reaches the inner space of the condenser (3).

6. **Equipment for capturing VOCs, applicable to hydrocarbon storage tanks,** according to any of claims 2 to 5, **characterized in that** it incorporates a collector tank (6) which receives the condensed compounds from the condenser (3) by gravity by way of an evacuation tube (13) which starts on the lowest area of the collector vessel (12) of the condenser (3) and such evacuation tube (13) flows into the collector tank (6) arranged below the condenser (3).

7. **Equipment for capturing VOCs, applicable to hydrocarbon storage tanks,** according to claim 6, **characterized in that** the evacuation tube (13) incorporates a control valve (5).

8. **Equipment for capturing VOCS, applicable to hydrocarbon storage tanks,** according to any one of the preceding claims, **characterized in that** it also comprises a cyclone (18) at the outflow of the condenser (3) to eliminate the particles which have not been eliminated by gravity.

9. **Process for capturing VOCs, applicable to hydrocarbon storage tanks,** according to any one of Claims 1 to 8, **characterized in that**
- the current of contaminated air in the ascending direction inside the heat exchanger (4) undergoes a first lowering of temperature caused by the return of the current of cold clean air which also enters inside the heat exchanger (4) in the descending direction coming from the outflow of the condenser (3).
- inside the inner space of the condenser (3), a sharp drop in temperature by means of the liquid nitrogen is generated, which causes the condensation of the volatile organic compounds (VOCs).
- the condensates generated inside the condenser (3) fall downwards by gravity to the collector vessel (12) constituting the bottom of the condenser (3), such condensates subsequently also flowing by gravity to the collector tank (6) by way of the evacuation tube (13).
- the return current of clean air which travels through the interior of the heat exchanger (4) reaches the outflow tube (7).

10. **Process for capturing VOCs, applicable to hydrocarbon storage tanks,** according to claim 9, **characterized in that** the sharp drop in temperature inside the condenser (3) is generated by means of the injection of liquid nitrogen in nebulized gas form which enters into direct contact with the current of contaminated air which reaches the inner space of the condenser (3).

11. **Process for capturing VOCs, applicable to hydrocarbon storage tanks,** according to any of claims 9 or 10, **characterized in that** the injection of nebulized gas follows a direction perpendicular to the direction of the current of contaminated air which enters inside the condenser (3).

12. **Process for capturing VOCs, applicable to hydrocarbon storage tanks,** according to claim 9, **characterized in that**
- the sharp drop in temperature inside the condenser (3) is generated by means of liquid nitrogen which flows through the interior of the tubes (16) incorporated inside the inner space of the condenser (3);
- the current of contaminated air which reaches the condenser (3) enters into contact with the tubes (16) through which the liquid nitrogen flows, sharply cooling such current of contaminated air upon contact with such tubes (16).
